## Europäisches Patentamt

## European Patent Office

## Office européen des brevets

(19)

(11) Numéro de publication: **0 165 420**
**B1**

## FASCICULE DE BREVET EUROPÉEN

(12)

(45) Date de publication du fascicule du brevet:
16.12.87

(51) Int. Cl.⁴: **A 23 C 9/146,** A 23 C 11/04

(21) Numéro de dépôt: **85105427.0**

(22) Date de dépôt: **03.05.85**

(54) Procédé de préparation d'un lait écrémé.

(30) Priorité: **22.05.84 CH 2512/84**

(43) Date de publication de la demande:
**27.12.85 Bulletin 85/52**

(45) Mention de la délivrance du brevet:
**16.12.87 Bulletin 87/51**

(84) Etats contractants désignés:
**AT BE DE FR IT NL SE**

(56) Documents cité:
**DE-A-2 536 899**
**FR-A-1 469 793**
**GB-A-742 647**
**GB-A-993 719**
**US-A-1 954 769**
**US-A-2 072 903**
**US-A-3 074 797**
**US-A-3 320 072**

(73) Titulaire: **SOCIETE DES PRODUITS NESTLE S.A.,
Case postale 353, CH- 1800 Vevey (CH)**

(72) Inventeur: **Wenner, Valentin, Ch. des Vignes 84,
CH- 1814 La Tour- de- Peilz (CH)**

LIBER, STOCKHOLM 1987

EP 0 165 420 B1

**0 165 420**

## Description

La présente invention a pour objet un procédé de préparation d'un lait écrémé à teneur réduite en phosphate et en calcium.

Il est connu que pour rendre le lait de vache mieux adapté aux besoins nutritionnels et physiologiques du nourrisson on peut l'appauvrir en sels minéraux et l'enrichir en protéines du lactosérum plus digestes que la caséine. Il est connu également que la sécrétion gastrique d'acide et de pepsine est relativement faible chez le nourrisson et qu'un lait adapté aux besoins du nourrisson devrait donc présenter un faible pouvoir tampon.

C'est ainsi qu'un procédé connu de préparation d'un lait adapté aux besoins du nourrisson consiste à déminéraliser un lactosérum par échange d'ions ou par électrodialyse et ajouter un caséinate à ce lactosérum déminéralisé. Un autre procédé connu consiste à recombiner dans des proportions adéquates des composants du lait, notamment caséine ou caséinates, protéines de lactosérum ultrafiltrées, lactose, sel et vitamines.

Cependant, on peut reprocher à ces procédés le fait qu'ils impliquent l'élimination de quantités substantielles de composants mineurs connus ou inconnus du lait. Certains de ces composants mineurs peuvent en effet présenter un intérêt non négligeable pour le métabolisme et la physiologie du nourrisson.

US-A-2072903 et US-A-1954769 décrivent la préparation de laits ou petits-laits à teneur réduite en calcium et en phosphate par acidification et passage sur un échangeur de cations tel qu'une zéolite.

GB-A-742647 décrit un procédé permettant l'usage de lactosérum acide pour la préparation d'un produit adapté aux besoins du nourrisson, dans lequel un lactosérum acide en mélange éventuel avec un lait écrémé est passé sur un échangeur d'anions pour réduire son acidité.

La présente invention a pour but de proposer une approche nouvelle de cette problématique par une réduction adéquate de la teneur en phosphate et en calcium du lait écrémé lui-même et l'utilisation du produit obtenu pour la préparation d'un lait adapté aux besoins du nourrisson. La présente invention a également pour but de proposer un lait adapté aux besoins du nourrisson ainsi obtenu qui présente lui-même une teneur en Ca et en phosphate réduite.

A cet effet, le procédé de préparation d'un lait écrémé à teneur réduite en phosphate et en calcium selon la présente invention est caractérisé par le fait que l'on acidifie un lait écrémé jusqu'à un pH compris entre 5,2 et 6,0 avec un lactosérum doux décationisé et l'on passe le lait écrémé acidifié sur un échangeur d'anions. De préférence, on acidifie le lait écrémé jusqu'à un pH de 5,4-5,6.

On a constaté en effet que, si l'on acidifie un lait écrémé dans les limites indiquées, les ions phosphate sont, de manière inattendue, retenus préférentiellement aux ions citrate et Cl⁻ sur l'échangeur d'anions, au contraire de ce que l'on observe lors d'une déminéralisation de lactosérum par échange d'ions. On a constaté en outre que, de manière également surprenante, non seulement les ions phosphate sont ainsi retenus sur l'échangeur d'anions mais également les ions Ca++.

Dans le présent exposé, on utilise l'expression "lait écrémé acidifié" pour désigner un mélange de lait écrémé et d'un agent acidifiant, quel que soit ce dernier. C'est ainsi que dans un mode de réalisation du présent procédé où l'on acidifie un lait écrémé par addition d'un lactosérum décationisé, l'expression "lait écrémé acidifié" désigne le mélange de lait écrémé et de lactosérum décationisé.

En outre, dans le présent exposé, on utilise ci-après l'expression "lactosérum déminéralisé" pour désigner un lactosérum décationisé et désanionisé, par opposition à un lactosérum décationisé mais non désanionisé.

Enfin, on utilisera l'expression "protéines sériques totales" pour désigner toute la matière azotée du lactosérum déterminée comme l'azote total multiplié par 6,38.

L'utilisation du lait écrémé à teneur réduite en phosphate et en calcium obtenu par le procédé selon la présente invention pour la préparation d'un lait adapté aux besoins du nourrisson est caractérisée par le fait que l'on prépare un mélange comprenant, en % en poids par rapport à la matière sèche du mélange, 15-25 % de matière sèche dudit lait écrémé à teneur réduite en phosphate et en calcium, 45-55 % de matière sèche d'un lactosérum déminéralisé et 25-30 % de matière grasse.

Le lait adapté aux besoins du nourrisson obtenu par l'utilisation du produit du procédé selon la présente invention est caractérisé par le fait qu'il comprend, en % en poids de matière sèche:

| | |
|---|---|
| caséine | 4,5-5,5 % |
| protéines sériques totales | 7,0-8,0 % |
| matière grasse | 25-30 % |
| lactose | 54-62 % |
| Ca | 0,2-0,4 % |
| Mg | 0,015-0,05 % |
| Na | 0,10-0,17 % |
| K | 0,4-0,6 % |
| phosphate | 0,4-0,6 % |
| citrate | 0,3-3 % |
| Cl | 0,3-0,45 % |

Pour mettre en oeuvre le présent procédé, on peut partir d'un lait écrémé de vache frais ou reconstitué. On acidifie donc ce lait jusqu'à un pH de 5,2-6,0, de préférence 5,4-5,6. Le domaine de pH est limité vers le bas par la précipitation de la caséine. Il est limité vers le haut par la disparition de la rétention préférentielle surprenante du phosphate au profit de la rétention du citrate et du chlorure.

Pour réaliser cette acidification, on utilise un lactosérum doux, tel que produit par exemple par les fromageries de pâtes pressées et pâtes cuites et par les fabricants de caséine présure, décationisé par passage sur un échangeur de cations, notamment un échangeur de type sulfonique. Un tel lactosérum peut avantageusement présenter un pH compris entre 1,2 et 3,0. On suppose que si un lactosérum décationisé se prête particulièrement bien à la mise en oeuvre du présent procédé c'est parce qu'il exerce par dilution, chélation et acidification, un triple effet de dégagement du Ca de la micelle de caséine qui entraîne une libération du phosphate inorganique de la micelle de caséine.

Dans l'étape suivante du présent procédé, on passe donc le lait écrémé acidifié sur un échangeur d'anions. Cet échangeur peut être notamment du type ammonium quaternaire ou amine secondaire ou tertiaire. On peut utiliser l'échangeur d'anions sous la forme OH⁻. Dans ce cas, le lait écrémé passé sur l'échangeur présente un pH moyen compris entre environ 7,5 et 9 et on peut le neutraliser de préférence avec de l'acide citrique. On peut utiliser également l'échangeur d'anions sous la forme d'anions citrate et/ou Cl⁻. Dans ce cas, les anions phosphate sont échangés directement contre les anions citrate et/ou Cl⁻ et l'on n'observe pas d'élévation du pH lors du passage sur l'échangeur.

On passe de préférence le lait écrémé sur l'échangeur d'anions à raison de 3,5-18 litres de lait écrémé par équivalent de capacité de l'échangeur. Si l'on reste en deçà du rapport minimum ainsi indiqué, on utilise un volume inutilement élevé d'échangeur. Si l'on va au-delà du rapport maximum ainsi indiqué, on n'obtient pas une réduction suffisante de la teneur en phosphate du lait écrémé.

Le lait écrémé à teneur réduite en phosphate et en calcium obtenu par le présent procédé est donc un produit intermédiaire destiné à être utilisé pour la préparation de laits adaptés aux besoins du nourrisson. Cette utilisation se fait au mieux, comme indiqué ci-dessus, en préparant un mélange comprenant, en % en poids par rapport à la matière sèche du mélange, 15-25 % de matière sèche dudit lait écrémé à teneur réduite en phosphate et en calcium, 45-55 % de matière sèche d'un lactosérum déminéralisé et 25-30 % de matière grasse. Pour préparer ce mélange, on peut utiliser un lactosérum déminéralisé par échange d'ions ou par électrodialyse p. ex. On utilise de préférence un lactosérum doux déminéralisé par décationisation sur un échangeur de cations suivie d'une désanionisation sur un échangeur d'anions. En ce qui concerne la matière grasse, on utilise de préférence une matière grasse lactique additionnée d'une petite proportion de matière grasse végétale.

On peut préparer un mélange sec ou liquide selon que l'on a ou non séché au préalable, par atomisation p. ex., le lait écrémé à teneur réduite en phosphate et en calcium et/ou le lactosérum déminéralisé. On peut, le cas échéant, sécher le mélange liquide lui-même par atomisation p. ex. Le lait adapté aux besoins du nourrisson ainsi obtenu présente lui-même une teneur réduite en phosphate et en calcium. Sa composition est indiquée ci-dessus.

Les exemples ci-après sont présentés à titre d'illustration. Les pourcentages y sont donnés en poids.

## Exemple 1

On prend un lait écrémé présentant un pH de 6,6 et une teneur en matière sèche de 9 % et contenant, exprimé en mg d'ions par 100 ml de lait écrémé:

phosphate 270 mg/100 ml

citrate 180 mg/100 ml

calcium 120 mg/100 ml

On acidifie ce lait écrémé jusqu'à pH 5,5 par addition de lactosérum doux décationisé présentant un pH de 1,8 et une teneur en matière sèche de 5,5 %, à raison de 0,4 l de lactosérum par l de lait écrémé.

On passe le lait écrémé acidifié sur un échangeur d'anions sous forme OH⁻, à raison de 3,5 l de lait par équivalent de capacité de l'échangeur. Le pH moyen du lait passé sur l'échangeur s'établit à 9,0. On neutralise à pH 7,0 avec de l'acide citrique et l'on obtient un lait écrémé à teneur réduite en phosphate et en calcium présentant une teneur en matière séche de 8 % et contenant, exprimé en mg d'ions par 100 ml de lait écrémé:

phospbate 134 mg/100 ml

citrate 134 mg/100 ml

calcium 46 mg/100 ml

## Exemples 2-4

On prépare différents laits écrémés à teneur réduite en phosphate et en calcium de la manière décrite à l'exemple 1, à l'exception du fait que l'on passe le lait écrémé acidifié sur l'échangeur d'ions à raison de différents volumes de lait par équivalent de capacité de l'échangeur.

Les valeurs respectives des volumes de lait écrémé acidifié passés sur l'échangeur d'anions (vol passé), des pH moyens du lait passé sur l'échangeur (pH moyen), de la teneur en matière sèche du lait passé sur l'échangeur (matière sèche) et de la teneur en ions de ce lait après neutralisation à pH 7,0 (ions) sont réunies dans le tableau ci-après. Les données concernant le lait écrémé de départ sont rappelées dans le prolongement des colonnes de pH, matière sèche et ions pour faciliter la comparaison.

| Ex. No. | vol passé 1/équ | pH moyen | matière sèche % | phosphate | ions citrate mg/100 ml | Ca |
|---|---|---|---|---|---|---|
| 1 | 3,5 | 9 | 8 | 134 | 134 | 46 |
| 2 | 7 | 8,9 | 8 | 120 | 121 | 44 |
| 3 | 10,5 | 8 | 8 | 140 | 143 | 51 |
| 4 | 17,5 | 7,7 | 8 | 150 | 130 | 55 |
| lait écrémé de départ | | 6,6 | 9 | 270 | 180 | 120 |

## Exemple 5

On acidifie un lait écrémé par addition d'un lactosérum doux décationisé. On passe le lait écrémé acidifié sur un échangeur d'anions sous forme OH⁻, à raison de 10,5 l de lait écrémé acidifié par équivalent d'échangeur.

On prépare un lait en poudre adapté aux besoins du nourrisson en mélangeant le lait écrémé à teneur réduite en phosphate et en calcium ainsi obtenu avec un lactosérum déminéralisé et de la matière grasse dans des proportions telles que le mélange comprenne, en % par rapport à la matière sèche du mélange, 21 % de matière sèche de ce lait écrémé à teneur réduite en phosphate et en calcium, 51,5 % de matière sèche du lactosérum déminéralisé et 27,5 % de matière grasse. On concentre le mélange par évaporation sous vide jusqu'à une teneur en matière sèche de 40 % et on le sèche par atomisation. La poudre obtenue présente une teneur en humidité de environ 5 %.

Les détails concernant les caractéristiques et la composition des différents produits impliqués ou obtenus dans le présent exemple sont réunis dans le tableau ci-après. Les pourcentages sont indiqués par rapport au poids total dans les 4 premières colonnes et par rapport au poids de matière sèche dans les 3 dernières colonnes. Pour des questions de mise en page, les en-têtes des colonnes sont abrégés. Les en-têtes complets sont les suivants:

1ére col (lait écr.): Lait écrémé de départ
2e col (lact. déc.): Lactosérum décationisé
3e col (lait écr. ac.): Lait écrémé acidifié
4e col (lait écr. réd.): Lait écrémé à teneur réduite en phosphate et en calcium
5e col (lait écr. réd.): Lait écrémé à teneur réduite en phosphate et en calcium
6e col (lact. dém.): Lactosérum déminéralisé
7e col (lait adapt.): Lait adapté aux besoins du nourrisson

| | | lait écr. | lact. déc. | lait écr. ac. | lait écr. réd. | lait écr. réd. | lact. dém. | lait adapt. |
|---|---|---|---|---|---|---|---|---|
| | ph | 6,7 | 1,8 | 5,5 | 7,5 | 7,5 | 6,7 | 6,8 |
| | matière sèche % | 9,0 | 5,5 | 8,0 | 8,0 | 8,0 | 20 | 95 |
| | caséine % | 2,8 | 0 | 2,0 | 2,0 | 25 | 0 | 5,0 |
| | protéines sériques % totales | 0,6 | 0,6 | 0,6 | 0,6 | 7,5 | 12 | 7,4 |
| | matière grasse % | 0,1 | 0,05 | 0,08 | 0,08 | 1,0 | 1,0 | 27,5 |
| | lactose % | 5,5 | 4,9 | 5,3 | 5,3 | 61 | 86 | 58 |
| | Ca % | 0,115 | 0,002 | 0,081 | 0,042 | 0,58 | 0,34 | 0,28 |
| | Mg % | 0,011 | 0,001 | 0,008 | 0,006 | 0,06 | 0,02 | 0,02 |
| | Na % | 0,048 | 0,06 | 0,036 | 0,038 | 0,40 | 0,10 | 0,15 |
| | K % | 0,165 | 0,016 | 0,116 | 0,122 | 1,40 | 0,30 | 0,45 |
| | phosphate % | 0,270 | 0,150 | 0,235 | 0,130 | 1,70 | 0,35 | 0,51 |
| | citrate % | 0,180 | 0,160 | 0,174 | 0,106 | 1,25 | 0,50 | 0,50 |
| | Cl % | 0,120 | 0,100 | 0,112 | 0,093 | 0,90 | 0,08 | 0,22 |

La teneur en Cl du lait adapté est standardisée lors du mélange à une valeur comprise entre 0,3 et 0,45 % par addition de KCl; $MgCl_2$ et/ou $CaCl_2$.

## Revendications

1. Procédé de préparation d'un lait écrémé à teneur réduite en phosphate et en calcium, caractérisé par le fait que l'on acidifie un lait écrémé jusqu'à un pH compris entre -5,2 et 6,0 avec un lactosérum doux décationisé et l'on passe le lait écrémé acidifié sur un échangeur d'anions.

2. Procédé selon la revendication 1, caractérisé par le fait que l'on acidifie le lait écrémé jusqu'à un pH de 5,4-5,6.

3. Procédé selon la revendication 1, caractérisé par le fait que l'on acidifie le lait écrémé avec un lactosérum doux décationisé présentant un pH compris entre 1,2 et 3,0.

4. Procédé selon la revendication 1, caractérisé par le fait que l'échangeur d'anions est du type ammonium quaternaire ou amine secondaire ou tertiaire.

5. Procédé selon la revendication 1, caractérisé par le fait que l'échangeur d'anions est sous forme OH-.

6. Procédé selon la revendication 1, caractérisé par le fait que l'échangeur d'anions est sous forme d'anions citrate et/ou Cl-.

7. Procédé selon la revendication 1, caractérisé par le fait que l'on passe sur l'échangeur d'anions 3,5-18 litres de lait écrémé par équivalent de capacité de l'échangeur.

8. Procédé selon la revendication 5, caractérisé par le fait qu'après le passage sur l'échangeur d'anions on neutralise avec de l'acide citrique.

9. Utilisation du lait écrémé à teneur réduite en phosphate et en calcium obtenu par le procédé selon la revendication 1 pour la préparation d'un lait adapté aux besoins du nourrisson, caractérisée par le fait que l'on prépare un mélange comprenant, en % en poids par rapport à la matière sèche du mélange, 15 à 25 % de matière sèche dudit lait écrémé à teneur réduite en phosphate et en calcium, 45-55 % de matière sèche d'un lactosérum déminéralisé et 25-30 % de matière grasse.

10. Lait adapté aux besoins du nourrisson obtenu par l'utilisation selon la revendication 9, caractérisé par le fait qu'il comprend, en % en poids de matière sèche:

| caséine | 4,5-5,5 % |
|---|---|
| protéines sériques totales | 7,0-8,0 % |
| matière grasse | 25-30 % |
| lactose | 54-62 % |
| Ca | 0,2-0,4 % |
| Mg | 0,015-0,05 % |
| Na | 0,10-0,17 % |
| K | 0,4-0,6 % |
| phosphate | 0,4-0,6 % |
| citrate | 0,3-3 % |
| Cl | 0,3-0,45 % |

**Patentansprüche**

1. Verfahren zur Herstellung einer Magermilch mit vermindertem Phosphat- und Calciumgehalt, dadurch gekennzeichnet, daß man eine Magermilch mit einem entkationisierten, süßen Milchserum bis auf einen zwischen 5,2 und 6,0 liegenden pH-Wert ansäuert und daß man die angesäuerte Magermilch über einen Anionenaustauscher führt.

2. Verfahren nach Anspruch 1, dadurch gekennzeichnet, daß man die Magermilch bis auf einen pH-Wert von 5,4 bis 5,6 ansäuert.

3. Verfahren nach Anspruch 1, dadurch gekennzeichnet, daß man die Magermilch mit einem entkationisierten, süßen Milchserum ansäuert, welches einen zwischen 1,2 und 3,0 liegenden pH-Wert aufweist.

4. Verfahren nach Anspruch 1, dadurch gekennzeichnet, daß der Anionenaustauscher ein solcher vom Typus quaternärer Ammoniumverbindungen oder sekundärer oder tertiärer Amine ist.

5. Verfahren nach Anspruch 1, dadurch gekennzeichnet, daß der Anionenaustauscher in der OH⁻ -Form vorliegt.

6. Verfahren nach Anspruch 1, dadurch gekennzeichnet, daß der Anionenaustauscher in der Citratanionen-Form und/oder Cl⁻ -Ionen-Form vorliegt.

7. Verfahren nach Anspruch 1, dadurch gekennzeichnet, daß man 3,5 bis 18 Liter Magermilch je Äquivalent Austauscherkapazität über den Anionenaustauscher führt.

8. Verfahren nach Anspruch 5, dadurch gekennzeichnet, daß man nach dem Führen über den Anionenaustauscher mit Citronensäure neutralisiert.

9. Verwendung von Magermilch mit vermindertem Phosphat- und Calciumgehalt, welche nach dem Verfahren nach Anspruch 1 erhalten worden ist, für die Herstellung einer Milch, welche auf die Bedürfnisse eines Säuglings abgestimmt ist, dadurch gekennzeichnet, daß man eine Mischung herstellt, welche in Gew.-%, bezogen auf die Trockensubstanz der Mischung, enthält: 15 bis 25 % Trockensubstanz an der genannten Magermilch mit vermindertem Phosphat- und Calciumgehalt, 45 bis 55 % Trockensubstanz an einem entmineralisierten Milchserum, und 25 bis 30 % Fett.

10. Auf die Bedürfnisse eines Säuglings abgestimmte Milch, welche durch die Verwendung gemäß Anspruch 9 erhalten worden ist, dadurch gekennzeichnet, daß sie in Gew.-%, bezogen auf die Trockensubstanz, enthält:

| Casein | 4,5-5,5 % |
|---|---|
| Gesamtserumproteine | 7,0-8,0 % |
| Fett | 25-30 % |
| Lactose | 54-62 % |
| Ca | 0,2-0,4 % |
| Mg | 0,015-0,05 % |
| Na | 0,10-0,17 % |
| K | 0,4-0,6 % |
| Phosphat | 0,4-0,6 % |
| Citrat | 0,3-3 % |
| Cl | 0,3-0,45 % |

**Claims**

1. A process for the production of a skimmed milk of reduced phosphate and calcium contents, wherein a skimmed milk is acidified to a pH of from 5.2 to 6.0 with a decationized sweet lactoserum and the acidified skimmed milk is passed over an anion exchanger.

2. A process as claimed in Claim 1, wherein the skimmed milk is acidified to a pH of from 5.4 to 5.6.

3. A process as claimed in Claim 1, wherein the skimmed milk is acidified with a decationized sweet lactoserum having a pH of from 1.2 to 3.0.

4. A process as claimed in Claim 1, wherein the anion exchanger resin is of the quaternary ammonium type or secondary or tertiary amine type.

5. A process as claimed in Claim 1, wherein the anion exchanger is in the OH⁻-form.

6. A process as claimed in Claim 1, wherein the anion exchanger is in the form of citrate and/or Cl⁻-anions.

7. A process as claimed in Claim 1, wherein from 3.5 to 18 liters of skimmed milk per equivalent of exchanger capacity are passed over the anion exchanger.

8. A process as claimed in Claim 5, wherein passage over the anion exchanger is followed by neutralization.

9. The use of the skimmed milk of reduced phosphate and calcium content obtained by the process claimed in Claim 1 for the production of a milk adapted to the needs of infants, wherein a mixture is prepared which contains, in percent by weight based on the dry matter of the mixture, from 15 to 25 % of dry matter of the skimmed milk of reduced phosphate and calcium contents, from 45 to 55 % of dry matter of a demineralized lactoserum and from 25 to 30 % of fats.

10. A milk adapted to the needs of infants obtained by the use claimed in Claim 9, which contains in percent by weight of dry matter,

from 4.5 to 5.5 % of casein,
from 7.0 to 8.0 % of total serum proteins,
from 25 to 30 % of fats,
from 54 to 62 % of lactose,
from 0.2 to 0.4 % of calcium,
from 0.015 to 0.05 % of magnesium,
from 0.10 to 0.17 % of sodium,
from 0.4 to 0.6 % of potassium,
from 0.4 to 0.6 % of phosphate,
from 0.3 to 3 % of citrate,
from 0.3 to 0.45 % of chlorine.